# EUROPEAN PATENT APPLICATION

(11) **EP 4 850 841 A1**
(43) Date of publication of application: **09.12.2026**
(21) Application number: 26180372.0
(22) Date of filing: 21.05.2026
(51) Int. Cl.: B23K 9/29, B23K 9/28, B23K 9/073, B23K 9/167, B23K 9/173

(54) **AUTOMATIC WIRE STICK OUT IN METAL INERT GAS (MIG) WELDING SETUPS**

(30) Priority: 30.05.2025 US 202563814983 P; 06.05.2026 US 202619669379
(71) Applicant: Illinois Tool Works Inc., Glenview IL 60025 (US)
(72) Inventor: GELLINGS, Beau Daniel, Glenview, 60025 (US)
(74) Representative: HGF

(57) **Abstract**

Systems and methods are provided for automatic wire stick out in metal inert gas (MIG) welding setups. An example welding-type system (10) may include an electrode wire source configured to provide an electrode wire and a welding-type torch (30), with the welding-type torch (30) configured to automatically feed out a pre-set amount of electrode wire at least before a start of a weld. The pre-set amount may be set or adjusted based on one or more attributes of the electrode wire (30), and/or based on input and/or information relating to the feeding out of the pre-set amount. The pre-set amount may be set or adjusted dynamically before the start of the weld.

## Description

### CLAIM OF PRIORITY

This patent application claims priority to and claims benefit from United States Provisional Patent Application Serial No. 63/814,983, filed on May 30, 2025. The above identified application is hereby incorporated herein by reference in its entirety.

### BACKGROUND

Welding has become increasingly ubiquitous. Welding may be performed in a manual manner (e.g., being performed by a human), or at least some aspects of it may be performed in an automated manner. Equipment or components used during welding operations may be driven using engines. For example, engines may be used to drive, for example, generators, power sources, etc. used during welding operations.

In some instances, conventional welding-type systems may have some limitations and/or disadvantages. For example, conventional welding-type systems may have limitations with respect to setting up some of the components and/or material used during welding operation.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for automatic wire stick out in metal inert gas (MIG) welding setups, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 shows an example metal inert gas (MIG) welding system.
Fig. 3 shows an example metal inert gas (MIG) welding torch.

### DETAILED DESCRIPTION

Solutions based on the present disclosure are directed to improving operation and use of welding-type setups or systems, particularly with respect to setting up the setups and systems for welding operations. In particular, for metal inert gas (MIG) welding operations, in some instances it may be necessary to have the metal wire stick out by a particular amount or length before a MIG weld is initiated. Such wire stick out may pose some challenges, however, as it is common for users, especially new and/or inexperienced users, to struggle with determining the correct amount of wire stick out. In various embodiments in accordance with the present disclosure, such issues may be addressed such as by configuring MIG based welding-type systems to automatically stick out a particular amount (or length) of the wire, such as before initiating any weld.

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

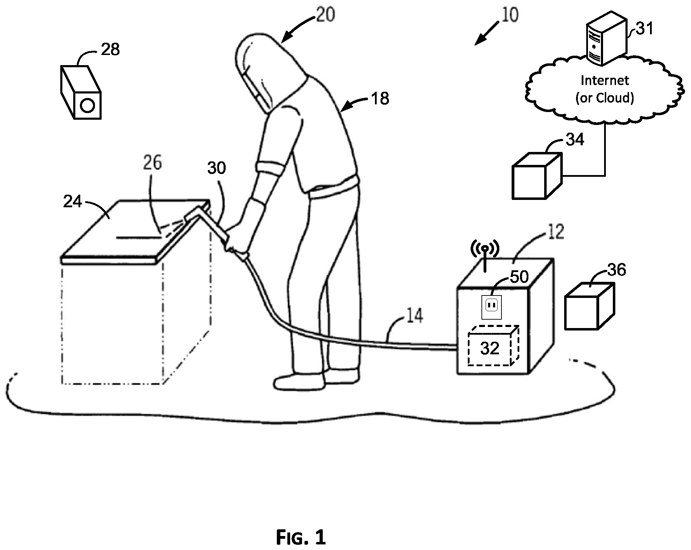

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations. For example, the welding-type setup 10 may comprise a generator (not shown) driven by the engine 32, which may be used in generating power for use in driving at least some of the components of the welding-type setup 10.

Optionally in any implementation, the welding-type setup 10 may comprise a starting battery 36, which may be used to provide DC power (e.g., at 12V). In this regard, the starting battery 36 may be used, e.g., to enable starting the engine 32 when not running (e.g., at start of operation, when in shutoff mode, etc.). The starting battery 36 may also be used, in some instances, to provide low power if/when needed. While the starting battery 36 is shown as a separate, external component, in some cases the starting battery 36 may be disposed within the equipment 12.

Optionally in any implementation, the welding-type setup 10 may comprise weld monitoring equipment 28. The weld monitoring equipment 28 may be used to monitor various aspects of welding operations, such as in real-time-that is as welding is taking place. For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

Optionally in any implementation, the welding-type setup 10 may comprise one or more auxiliary electrical receptacles 50. For example, the auxiliary receptacles 50 may be disposed in the equipment 12 (as shown in Fig. 1), and/or may be disposed at different component(s). The auxiliary receptacles 50 may be used to provide power-e.g., AC power, such as 110VAC and/or 220VAC power, and/or DC power, such as 12 VDC and/or 24VDC power. The provided power may be supplied by the equipment 12. In some implementations, the welding-type setup 10 may be configured to enable a user to select output configurations for the auxiliary receptacles 50.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of the torch 30. The electrode delivers the current to the point of welding on the workpiece 24. In the welding-type setup 10, the operator 18 controls the location and operation of the electrode by manipulating the torch 30 and triggering the starting and stopping of the current flow.

In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

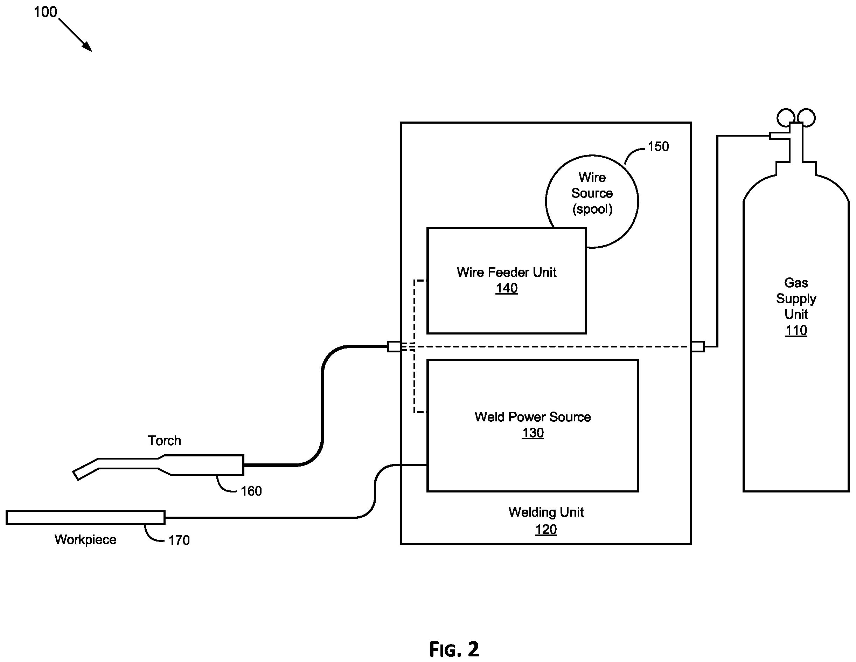

An example metal inert gas (MIG) welding based implementation is illustrated in Fig. 2, with the MIG welding implementation incorporating automatic wire stick out features implemented in accordance with the present disclosure.

Fig. 2 shows an example metal inert gas (MIG) welding system. Shown in Fig. 2 is an example welding system 100. In this regard, the welding system 100 represents an example metal inert gas (MIG) welding based implementation of the welding-type setup 10 of Fig. 1, configured for facilitating performing MIG welding based operations.

In the simplified implementation depicted in Fig. 2, the MIG based welding system 100 comprises a gas supply unit 110, a welding unit (or machine) 120, and a welding torch (gun) 160. As shown, the welding unit 120 comprises a weld power source 130, a wire feeder unit 140, and a wire source (e.g., a wire spool) 150. Nonetheless, the disclosure is not limited to such arrangement, and as such, some of the components of the welding unit 120 as shown in Fig. 2-namely, the wire feeder unit 140 and/or the wire source 150-may be separate physical components.

The wire feeder unit 140 may comprise wire feeding components (e.g., drive rolls, gears, etc.) for facilitating the feeding of an electrode wire, which may include obtaining (e.g., pulling) the electrode wire from an electrode wire source (e.g., the wire source 150) on one end, and feeding it on the other end (e.g., into the torch 160), such as via suitable connectors. For example, the wire feeder unit 140 may comprise one or more drive rolls (not shown), which may be used in facilitating the feeding of the electrode wire. The drive roll(s) may be arranged in pairs, and may comprise suitable features (e.g., grooves or the like) that allow for feeding the wire without crushing or deforming it, and/or, optionally, to ensuring that the electrode wire has desirable cross-section characteristics (e.g., shape, size, etc.).

In example operation, the welding system 100 may be used to apply MIG based welds, such to a workpiece 170. In this regard, in MIG based welding, a consumable electrode wire is fed from the wire source 150, via the wire feeder unit 140, through the torch 160. An electric arc is formed between the consumable electrode wire and the workpiece 170 as a current is supplied by the welding unit 120 to both of the torch 160 and the workpiece 170, with the weld power source 130 providing that power, as well as providing power to other components of the welding unit 120, such as to the wire feeder unit 140, to facilitate the wire feeding thereby.

The arc heats the workpiece metal(s) and the consumable electrode wire, causing them to melt and join, forming the weld. Further, along with the wire electrode, a shielding gas is fed from the gas supply unit 110 through the torch 160, to shield the weld (e.g., from atmospheric contamination). As illustrated in Fig. 2 a single connector between the welding unit 120 and the welding torch (gun) 160 may be used to provide the electrode wire, the shielding gas, and power from the welding unit 120 to the welding torch (gun) 160. Nonetheless, the disclosure is not limited to such design, and as such in some implementations separate dedicated connectors may be used providing one or more of the electrode wire, the shielding gas, and power.

In accordance with the present disclosure, MIG based welding system 100, such as the MIG based welding system 100, may be configured to provide and/or otherwise facilitate performing automatic wire stick out in conjunction with MIG welding based operations. In this regard, MIG welding based operations may have some challenges and limitations. For example, in some instances it may be necessary to have the electrode wire stick out by a particular amount before a MIG weld is initiated. Typically, this is done manually-that is, the user would have to manipulate the machine to stick out the electrode wire by some length. Doing so may be challenging, however, as it is common for users to struggle with determining the correct amount of wire "stick out" for MIG welding. This is especially the case with new users, who may struggle with determining the correct amount of wire stick-out, resulting in the wire sticking out too much or too little wire.

Solutions in accordance with the present disclosure address such challenges and/or limitations, particularly by use of automatic wire stick out in MIG welding-type systems. In this regard, in various example implementations based on the present disclosure, MIG based welding systems, such as the MIG based welding-type system 100, may be configured to automatically feed a particular stick out amount of the electrode wire, such as before initiating any weld. The stick out amount may be pre-set and/or pre-determined-that is, a pre-determined length of the electrode wire is fed out of the MIG torch (gun), and as such the MIG based welding-type setup (or system) may have an automatic setting for the wire stick out. Providing automatic wire stick out in this manner may offer various advantages, such as eliminating use of too much wire, which can lead to bad welds or bad starts. Automatic wire stick out may also minimize or eliminate pinned tips, burn back or welding issues which may be due to too little wire when starting welds.

The sticking out of the pre-determined length of wire may be triggered in response to particular, pre-defined criteria or conditions. In this regard, the automatic wire stick out may be triggered in various ways, and the disclosure is not limited to one particular approach. For example, in some example implementations, the automatic wire stick out may be triggered in response to a user interaction, such as an interaction with a component of the welding-type system. The user interaction may have pre-defined characteristics (e.g., a pre-defined pattern or the like), with the MIG based welding-type system automatically feeding out pre-determined length of electrode wire in response to detecting the pre-defined characteristics.

In an example implementation, the user interaction may be an interaction with the torch itself or a component thereof (e.g., the trigger of the torch) in a particular manner. For example, the MIG based welding-type system may feed out the pre-determined amount of electrode wire in response to the user interacting with the MIG torch trigger in particular pattern (e.g., clicking, pressing, or tapping the MIG torch trigger three times).

In some example implementations, the pre-set stick out amount is set or adjusted based on one or more attributes of the electrode wire. For example, the pre-set stick out amount may be set or adjusted based on one or both of a type of material of the electrode wire and at least one dimension of the electrode wire. As such, a pre-set stick amount may be different for aluminum wire compared to steel wire. Similarly, wires made of the same material may have different stick-out lengths for different wire gauges (different diameters).

In some example implementations, the pre-set stick out amount is set or adjusted based on input and/or information relating to the feeding out of the pre-set amount. For example, the pre-set stick out amount may be set or adjusted based on one or more of user input (e.g., provided via input devices in the welding-type system), sensory information (e.g., obtained via sensors in the welding-type system), and information from a setup sheet or a database associated with the welding-type system and applying of welds via the welding-type system.

In some example implementations, the welding-type system comprises one or more components configured to determine one or more attributes of the electrode wire that are used in conjunction with the automatic wire stick out operations.

For example, the welding-type system may comprise one or more sensors configured to obtain sensory information relating to the electrode wire (e.g., type of material, gauge, etc.), which are then used in determining the correct stick out length. In one example implementation, the sensors may simply comprise a scanner configured to read information embedded directly on the electrode wire or the spool (e.g., stickers, tags, scan codes, etc.). Nonetheless, actual sensors (e.g., measuring devices) may also be used. In some instances, an existing component in the system that is used during wire feeding may be used to obtain such information. For example, in instances where the wire feeder unit 140 comprises drive roll components, a drive roll component may be configured to determine at least one attribute of the electrode wire when engaging the electrode wire.

In some example implementations, the pre-set amount is set or adjusted dynamically. For example, the welding-type system may dynamically (on the fly) obtain information relating to the electrode wire and may determine the correct stick out length that is applied during the automatic wire stick out operations.

In some example implementations, the welding-type system comprises suitable circuitry for supporting the automatic wire stick out operations. For example, the welding-type system may comprise suitable control circuitry configured to determine the pre-set amount as described herein, storage circuitry configured to store one or more pre-set amounts and/or information relating to selecting the pre-set amount, etc.

In some example implementations, the welding-type system is configured to adjust the electrode wire before being fed during automatic wire stick out operations, to ensure accurate feeding of the pre-set amount. For example, in some instances, the electrode wire may be cut to ensure that tip of the electrode wire is flush with the nozzle of the MIG torch 160, through which the electrode wire is fed. In some instances, the electrode wire may be retracted, such as to ensure that it is flush with the nozzle of the torch 160. The electrode wire may also be retracted to ensure correct stick out length-e.g., where it is extended too much.

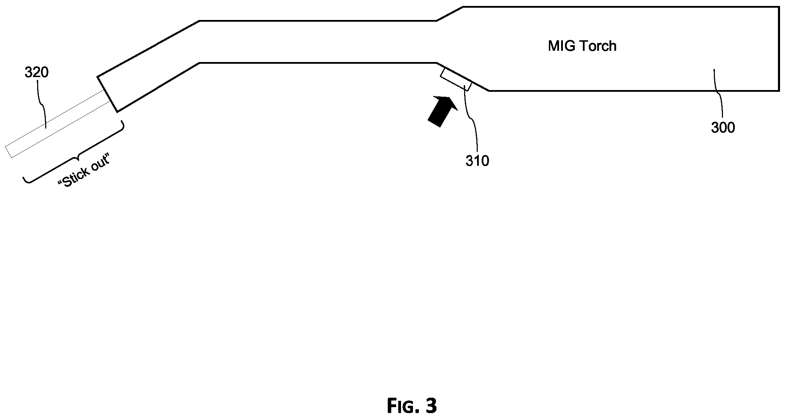

Fig. 3 shows an example metal inert gas (MIG) welding torch. Shown in Fig. 3 is an example MIG welding torch 300. In this regard, the MIG welding torch 300 represents an example implementation of the torch 160 of Fig. 2.

As shown in Fig. 3, the MIG welding torch 300 has a torch trigger 310 that is used during welding operations-e.g., being interacted with by the user, such as by clicking, pressing-and-holding, etc., to apply MIG welds. The MIG welding torch 300 feeds an electrode wire 320, which when a current is supplied to the MIG torch 300 and a workpiece (not shown), an electric arc is formed between the electrode wire 320 and the workpiece 170. The heating caused by the electric arc results in melting of the electrode wire 320, thus resulting in a weld.

In accordance with the present disclosure, the MIG welding torch 300 may be configured to support automatic wire stick out as described herein. In this regard, when automatic wire stick out is triggered, a pre-determined stick out length of the electrode wire 320 is fed out of the MIG torch 300, as shown in Fig. 3. In this regard, the welding-type torch may comprise a wire feeding component configured for feeding the electrode wire during welding operations, and the wire feeding component may be configured to automatically feed out the pre-set amount of electrode wire at least before a start of a weld. The automatic wire stick out may be triggered in many ways, as noted above. For example, as shown in Fig. 3, automatic wire stick out may be triggered in response to user interaction with the torch trigger 310, such as by clicking, pressing, or tapping the torch trigger 310 in particular manner (e.g., 3 times).

In some example implementations, the MIG torch 300 is configured to provide an indication or user feedback relating to the automatic wire stick out operations-e.g., when wire stick out is complete, when the electrode wire is extended more than the pre-set amount of electrode wire, etc.

In some example implementations, the MIG torch 300 is configured to retract or adjust amount of stick out of the electrode wire when the electrode wire is extended more than the pre-set amount of electrode wire.

An example welding-type system, in accordance with the present disclosure, comprises: an electrode wire source configured to provide an electrode wire; and a welding-type torch, wherein the welding-type torch is configured to automatically feed out a pre-set amount of electrode wire at least before a start of a weld.

In an example embodiment, the pre-set amount is set or adjusted based on one or more attributes of the electrode wire.

In an example embodiment, the one or more attributes of the electrode wire comprise at least one of a type of material of the electrode wire and at least one dimension of the electrode wire.

In an example embodiment, the pre-set amount is set or adjusted based on input and/or information relating to the feeding out of the pre-set amount In an example embodiment, the input and/or information relating to the feeding out of the pre-set amount comprises one or more of user input, sensory information, and information from a setup sheet or a database associated with the welding-type system and applying of welds via the welding-type system.

In an example embodiment, the pre-set amount is set or adjusted dynamically before the start of the weld.

In an example embodiment, the welding-type system further comprises control circuitry configured to determine the pre-set amount.

In an example embodiment, the welding-type system further comprises storage circuitry configured to store one or more pre-set amounts and/or information relating to selecting the pre-set amount.

In an example embodiment, the welding-type system further comprises one or more components configured to determine one or more attributes of the electrode wire.

In an example embodiment, the one or more components comprise at least one sensor or measuring device configured to obtain sensory information relating to at least one attribute of the electrode wire.

In an example embodiment, the one or more components comprise a drive roll component of the welding-type system, and wherein the drive roll component is configured to determine at least one attribute of the electrode wire when engaging the electrode wire.

In an example embodiment, the welding-type torch is configured to feed out the pre-set amount of electrode wire in response to a user interaction with a component of the welding-type system.

In an example embodiment, the user interaction comprises a pre-defined pattern, and wherein the welding-type torch is configured to feed out the pre-set amount of electrode wire in response to detecting the pre-defined pattern.

In an example embodiment, the component of the welding-type system comprises a trigger of the welding-type torch.

In an example embodiment, the user interaction comprises applying a pre-defined number of clicks to the trigger.

In an example embodiment, the welding-type torch is configured to provide an indication or user feedback when the electrode wire is extended more than the pre-set amount of electrode wire.

In an example embodiment, the welding-type torch is configured to retract or adjust amount of stick out of the electrode wire when the electrode wire is extended more than the pre-set amount of electrode wire.

In an example embodiment, the welding-type torch comprises a wire feeding component configured for feeding the electrode wire during welding operations, and wherein the wire feeding component is configured to automatically feed out the pre-set amount of electrode wire at least before a start of a weld.

In an example embodiment, the welding-type torch comprises a metal inert gas (MIG) based torch.

In an example embodiment, the welding-type system comprises a metal inert gas (MIG) based system.

In an example embodiment, the electrode wire is configured and/or adjusted before the automatic feeding out of the pre-set amount, to ensure accurate feeding of the pre-set amount.

In an example embodiment, configuring and/or adjusting the electrode wire comprises cutting the electrode wire to ensure that it is flush with a nozzle of the welding-type torch through which the electrode wire is fed.

In an example embodiment, configuring and/or adjusting the electrode wire comprises retracting the electrode wire to ensure that it is flush with a nozzle of the welding-type torch through which the electrode wire is fed.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1 A welding-type system, comprising:
   an electrode wire source configured to provide an electrode wire; and
   a welding-type torch,
   wherein the welding-type torch is configured to automatically feed out a pre-set amount of electrode wire at least before a start of a weld.
Clause 2 The welding-type system of clause 1, wherein the pre-set amount is set or adjusted based on one or more attributes of the electrode wire.
Clause 3 The welding-type system of clause 2, wherein the one or more attributes of the electrode wire comprise at least one of a type of material of the electrode wire and at least one dimension of the electrode wire.
Clause 4 The welding-type system of clause 1, wherein the pre-set amount is set or adjusted based on input and/or information relating to the feeding out of the pre-set amount.
Clause 5 The welding-type system of clause 4, wherein the input and/or information relating to the feeding out of the pre-set amount comprises one or more of user input, sensory information, and information from a setup sheet or a database associated with the welding-type system and applying of welds via the welding-type system.
Clause 6 The welding-type system of clause 1, wherein the pre-set amount is set or adjusted dynamically before the start of the weld.
Clause 7 The welding-type system of clause 1, further comprising control circuitry configured to determine the pre-set amount.
Clause 8 The welding-type system of clause 1, further comprising storage circuitry configured to store one or more pre-set amounts and/or information relating to selecting the pre-set amount.
Clause 9 The welding-type system of clause 1, further comprising one or more components configured to determine one or more attributes of the electrode wire.
Clause 10 The welding-type system of clause 9, wherein the one or more components comprise at least one sensor or measuring device configured to obtain sensory information relating to at least one attribute of the electrode wire.
Clause 11 The welding-type system of clause 9, wherein the one or more components comprise a drive roll component of the welding-type system, and wherein the drive roll component is configured to determine at least one attribute of the electrode wire when engaging the electrode wire.
Clause 12 The welding-type system of clause 1, wherein the welding-type torch is configured to feed out the pre-set amount of electrode wire in response to a user interaction with a component of the welding-type system.
Clause 13 The welding-type system of clause 12, wherein the user interaction comprises a pre-defined pattern, and wherein the welding-type torch is configured to feed out the pre-set amount of electrode wire in response to detecting the pre-defined pattern.
Clause 14 The welding-type system of clause 12, wherein the component of the welding-type system comprises a trigger of the welding-type torch.
Clause 15 The welding-type system of clause 14, wherein the user interaction comprises applying a pre-defined number of clicks to the trigger.
Clause 16 The welding-type system of clause 1, wherein the welding-type torch is configured to provide an indication or user feedback when the electrode wire is extended more than the pre-set amount of electrode wire.
Clause 17 The welding-type system of clause 1, wherein the welding-type torch is configured to retract or adjust amount of stick out of the electrode wire when the electrode wire is extended more than the pre-set amount of electrode wire.
Clause 18 The welding-type system of clause 1, wherein the welding-type torch comprises a wire feeding component configured for feeding the electrode wire during welding operations, and wherein the wire feeding component is configured to automatically feed out the pre-set amount of electrode wire at least before a start of a weld.
Clause 19 The welding-type system of clause 1, wherein the welding-type torch comprises a metal inert gas (MIG) based torch.
Clause 20 The welding-type system of clause 1, wherein the welding-type system comprises a metal inert gas (MIG) based system.
Clause 21 The welding-type system of clause 1, wherein the electrode wire is configured and/or adjusted before the automatic feeding out of the pre-set amount, to ensure accurate feeding of the pre-set amount.
Clause 22 The welding-type system of clause 21, wherein configuring and/or adjusting the electrode wire comprises cutting the electrode wire to ensure that it is flush with a nozzle of the welding-type torch through which the electrode wire is fed.
Clause 23 The welding-type system of clause 21, wherein configuring and/or adjusting the electrode wire comprises retracting the electrode wire to ensure that it is flush with a nozzle of the welding-type torch through which the electrode wire is fed.

## Claims

1. A welding-type system, comprising:
an electrode wire source configured to provide an electrode wire; and
a welding-type torch,
wherein the welding-type torch is configured to automatically feed out a pre-set amount of electrode wire at least before a start of a weld.

2. The welding-type system of claim 1, wherein the pre-set amount is set or adjusted based on one or more attributes of the electrode wire.

3. The welding-type system of claim 2, wherein the one or more attributes of the electrode wire comprise at least one of a type of material of the electrode wire and at least one dimension of the electrode wire.

4. The welding-type system of claim 1, wherein the pre-set amount is set or adjusted based on input and/or information relating to the feeding out of the pre-set amount and optionally
wherein the input and/or information relating to the feeding out of the pre-set amount comprises one or more of user input, sensory information, and information from a setup sheet or a database associated with the welding-type system and applying of welds via the welding-type system.

5. The welding-type system of claim 1, wherein the pre-set amount is set or adjusted dynamically before the start of the weld or wherein
the welding-type system further comprises control circuitry configured to determine the pre-set amount.

6. The welding-type system of claim 1, further comprising storage circuitry configured to store one or more pre-set amounts and/or information relating to selecting the pre-set amount.

7. The welding-type system of claim 1, further comprising one or more components configured to determine one or more attributes of the electrode wire.

8. The welding-type system of claim 7, wherein the one or more components comprise at least one sensor or measuring device configured to obtain sensory information relating to at least one attribute of the electrode wire or
wherein the one or more components comprise a drive roll component of the welding-type system, and wherein the drive roll component is configured to determine at least one attribute of the electrode wire when engaging the electrode wire.

9. The welding-type system of claim 1, wherein the welding-type torch is configured to feed out the pre-set amount of electrode wire in response to a user interaction with a component of the welding-type system.

10. The welding-type system of claim 9, wherein the user interaction comprises a pre-defined pattern, and wherein the welding-type torch is configured to feed out the pre-set amount of electrode wire in response to detecting the pre-defined pattern.

11. The welding-type system of claim 9, wherein the component of the welding-type system comprises a trigger of the welding-type torch, and optionally wherein the user interaction comprises applying a pre-defined number of clicks to the trigger.

12. The welding-type system of claim 1, wherein the welding-type torch is configured to provide an indication or user feedback when the electrode wire is extended more than the pre-set amount of electrode wire or
wherein the welding-type torch is configured to retract or adjust amount of stick out of the electrode wire when the electrode wire is extended more than the pre-set amount of electrode wire or
wherein the welding-type torch comprises a wire feeding component configured for feeding the electrode wire during welding operations, and wherein the wire feeding component is configured to automatically feed out the pre-set amount of electrode wire at least before a start of a weld.

13. The welding-type system of claim 1, wherein the welding-type torch comprises a metal inert gas (MIG) based torch or wherein the welding-type system comprises a metal inert gas (MIG) based system.

14. The welding-type system of claim 1, wherein the electrode wire is configured and/or adjusted before the automatic feeding out of the pre-set amount, to ensure accurate feeding of the pre-set amount.

15. The welding-type system of claim 14 , wherein configuring and/or adjusting the electrode wire comprises cutting the electrode wire to ensure that it is flush with a nozzle of the welding-type torch through which the electrode wire is fed or wherein configuring and/or adjusting the electrode wire comprises retracting the electrode wire to ensure that it is flush with a nozzle of the welding-type torch through which the electrode wire is fed.
